# EUROPEAN PATENT APPLICATION

(11) **EP 2 420 861 A1**
(43) Date of publication of application: **22.02.2012**
(21) Application number: 10173600.7
(22) Date of filing: 20.08.2010
(51) Int. Cl.: G01T 1/02, G01T 1/185, G01T 1/16

(54) **A radiation dose meter for measuring radiation dose in an external magnetic field**

(71) Applicant: Nederlandse Organisatie voor Toegepast -Natuurwetenschappelijk Onderzoek TNO, 2628 VK Delft (NL)
(72) Inventor: Wieringa, Fokko Pieter, 2628 VK Delft (NL); Kroes, René, 2628 VK Delft (NL)
(74) Representative: Jansen, Cornelis Marinus

(57) **Abstract**

The invention relates to a radiation dose meter for measuring radiation dose in a strong external magnetic field (100 mT - 10 T) by means of charged particles generated in the radiation dose meter, the radiation dose meter provided with an alignment unit capable of auto aligning the radiation dose meter in the external magnetic field so that a path of the said charged particles inside the radiation dose meter is substantially parallel to a direction of the external magnetic field.

## Description

### FIELD OF THE INVENTION

The invention relates to a radiation dose meter for measuring radiation dose in an external magnetic field.

The invention further relates to a radiation dose meter system, a magnetic resonance imaging unit and a nuclear fusion reactor.

### BACKGROUND OF THE INVENTION

Currently, attempts have been made to combine ionizing radiation treatment of a patient with on-line MRI imaging. An embodiment of such system is described in B.W. Raaymakers et al "Integrating a 1.5 T MRI scanner with a 6 MV accelerator: proof of concept", Phys. Med. Biol. 54 (2009). However, radiotherapy techniques require inline dosimetry to be carried out for performing due calibration of the radiation dose delivery according to regulations with high accuracy.

An embodiment of a radiation dose meter capable of measuring radiation dose in a strong external magnetic field is known from I. Meijsing et al "Dosimetry for the MRI accelerator: the impact of a magnetic field on the response of a Farmer NE2571 ionization chamber", Phys. Med. Biol. 54 (2009). It will be appreciated that the term "strong magnetic field" will be understood as a magnetic field having a magnetic flux density in the range of 100 mT - 10 T.

It is a disadvantage of the known ionization chamber that secondary electrons, generated inside the ionization volume of the chamber, interact with the magnetic field and are deviated from their path due to the Lorenz force. As a result complicated correction algorithms, that vary with 3D orientation of the measurement probe, have to be applied to the chamber's readings for enabling accurate absolute dosimetry. This implies that for ionization chambers as known from the art, the chambers orientation in respect to the field and radiation beam will have to be accurately monitored, which is cumbersome. Since the desired accuracy for dose measurement is very close to that of the international dose standard (for treatment outcome biological reasons), ionization chambers are used as field standards under normal conditions, because of the low uncertainty within the international calibration traceability. The need for additional probe positioning correction in strong magnetic fields, however, is a serious disadvantage because this directly increases the measurement uncertainty.

### SUMMARY OF THE INVENTION

It is an object of the invention to provide an improved radiation dose meter capable of carrying out at least accurate radiation dose measurements with high accuracy in a strong external magnetic field. In addition, it is an object of the invention to provide an improved radiation dose meter capable of carrying out as accurate measurements of the dose tempo in a strong external magnetic field, more preferably, capable of delivering a real-time readout.

To this end the radiation dose meter for measuring radiation dose in an external magnetic field by means of charged particles generated in the radiation dose meter, according to the invention, comprises an alignment unit capable of precisely aligning the radiation dose meter in the external magnetic field so that the path of the said charged particles inside the radiation dose meter is substantially parallel to the direction of the external magnetic field.

It is found advantageous to provide the radiation dose meter with alignment means which enable proper auto alignment of the ionization chamber with respect to the lines of the external magnetic field. In particular in the case where the radiation dose meter according to the invention is conceived to be used inside a magnetic resonance imaging apparatus, the radiation dose meter may be provided in a region of a substantially homogeneous magnetic field so that the alignment means, interacting with the external magnetic field properly align the radiation dose meter for avoiding deflection of the charged particles by action of the Lorenz force.

It will be appreciated that the term properly aligned should be understood as an alignment of the radiation dose meter in such a way that a path of the charged particles is substantially parallel to the field lines of the external magnetic field. For example, for an ionization chamber comprising a set of two parallel electrodes, the ionization chamber is aligned so that the electrodes are substantially perpendicular to the field lines of the external magnetic field.

Although it will be appreciated that the radiation dose meter according to the invention may be properly aligned manually, for example by using a suitable mechanism, it is found to be advantageous to allow the alignment means to align automatically by interacting with the magnetic field. It will be understood that multiple ionization chambers (e.g. in a 2D or 3D array) will align in a similar way, eliminating human alignment error and improving reproducibility.

In an embodiment of the radiation dose meter according to the invention the alignment unit comprises a material susceptible for being at least partially magnetized by the external magnetic field.

It is found that by providing a material interacting with the magnetic field at specific locations of the radiation dose meter, the material, positioned in the external magnetic field, will cause the radiation dose meter to orient in a specific way. For example, for an ionization chamber comprising two flat electrodes, the material may be provided at respective centers of the plates along a central axis of the ionization volume. As a result, the ionization chamber will align in the external magnetic filed so that the filed lines are parallel to the central axis of the ionization volume.

Preferably, the material is selected from a group consisting of a ferromagnetic material or a paramagnetic material.

Although using a ferromagnetic material may be preferable, it is found that even paramagnetic materials are capable of causing the radiation dose meters to align in a proper way. It will be appreciated that field strength of the external magnetic field may be in the range of 100mT - 10 T, preferably 500 mT - 7 T.

In a still further embodiment of the radiation dose meter according to the invention wherein the alignment unit comprises a mounting frame capable of enabling a three-dimensional displacement of the dose meter pursuant to forces acting on the said material.

It is found particularly advantageous to provide the radiation dose meter with a mounting frame which may allow rotational degree of freedom of the radiation dose meter, for example an ionization chamber or a semiconductor material. When such arrangement is provided in the external magnetic field, the radiation dose meter will rotate accordingly and in an automatic way. Preferable, the alignment unit comprises gimbal suspension. More preferably, the alignment unit comprises a plurality of springs for enabling such rotational displacement.

In a still further embodiment of the radiation dose meter according to the invention the dose meter is manufactured using the additive manufacturing technique. The additive manufacturing refers to a process that directly builds up a material structure, as opposed to a subtractive operation, which removes matter from a block of material to form a product. Such techniques are known per se, for example from liquid- or powder-based additive manufacturing, electron beam melting, laser engineered net shaping, selective laser sintering, etc.

It is found to be advantageous to use additive manufacturing techniques as precisely and cheap manufacturing of a plurality of suitable three-dimensional shapes may be enabled using such technology. However, fine mechanics techniques may be applied as well. Preferably, for manufacturing of such a radiation dose meter (ionization chamber) suitable non-magnetizable and electrically highly isolating materials may be used, such as nylon, polycarbonate, polyamide, etc. The electrodes may be manufactured form a non magnetizable electrically conductive material, such as carbon or conductive polymers.

For example, two mutually parallel flat electrode plates of an ionization chamber filled with a suitable gas or liquid may be provided on an inner side with a layer of non-magnetizable electrically conducting material. Suitable electrode connections may be arranged from carbon as well. Preferably, the electrodes and the connections are co-manufactured using per se known additive manufacturing (or traditional) techniques.

In a particular embodiment, when the radiation dose meter is suspended in the alignment unit using a set of springs, the electrical connections may be co-printed on the springs.

In a still further embodiment of the radiation dose meter according to the invention the material susceptible of being magnetized is implemented as a coreless electromagnet.

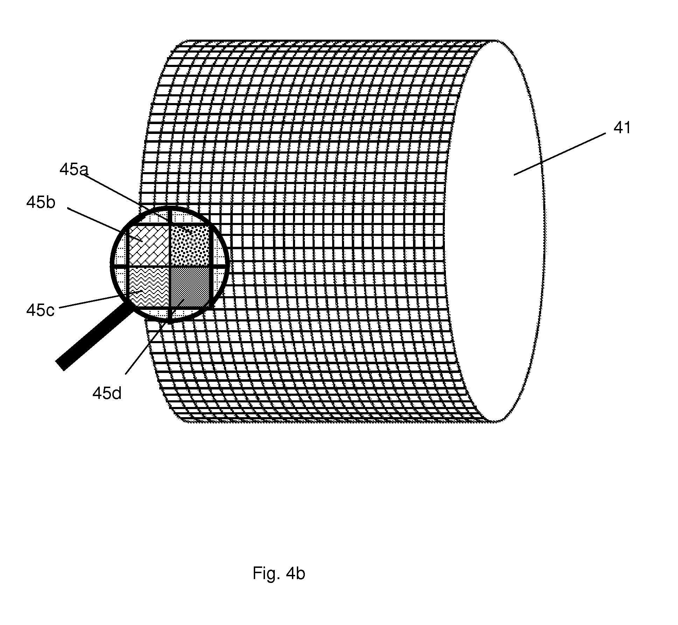

In a still further embodiment of the radiation dose meter according to the invention it comprises a matrix of repetitive patterned scintillators, each scintillator emitting at a specific optical wavelength and being sensitive to a particular pre-determined radiation dose rate in combination with a color camera imaging the said set of scintillators. As an example, if 3 types of scintillator materials are applied, which emit at 3 different wavelengths (e.g. Red, Green and Blue) a color camera can simultaneously capture the geometrical distribution for all 3 different scintillator materials. Since these materials also can exhibit different responses to the energy of the ionizing radiation, and/or exhibit a different efficiency of converting input dose into optical emission, the combined simultaneous readout allows for automatic beam energy compensation and/or an extremely wide dynamic doserate range. Due to differences in time-dependant behaviour (e.g. extinction time) simultaneous readout of different scintillators at different wavelengths also allows improved analysis of the ionizing radiation beam pulse shape over time. This embodiment is discussed in more detail with reference to Figure 4b.

Suitable materials may comprise a material from the following list:

| | | **Emmision** | **Primarv decay** |
|---|---|---|---|
| | **material description** | **peak [nm]** | **time [ns]** |
| **YAG (Ce)** | *Cerium-doped YAG (Yttrium aluminium garnet*) | 550 | 70 |
| **CaF2 (Eu)** | *Europium doped Calcium Fluoride* | 435 | 940 |
| **ZnSe (Te)** | *Tellurium doped Zinc Selenide* | 640 | 5000 |
| **CdW04** | *Cadmium Tungstate (CdWO₄* | 540 | 5000 |
| **NAI(TI)** | *Thallium doped Sodium Iodide* | 480 | 300 |
| **CsI(Na)** | *Sodium doped Cesium Iodide* | 420 | 700 |

For example, a first scintillator may be arranged to be saturated for a low dose rate, such as 0.1 Gy/min, a second scintillator may be arranged to be saturated for an intermediate dose rate such as 1 Gy/min, and a third scintillator may be arranged to be saturated for a higher dose such as 10 Gy/min.

Alternatively, an external surface of the radiation dose meter may be covered by a mixture or blend obtained from a suitable number of scintillator materials referred to above. Such embodiment has an advantage that the radiation dose meter is provided with substantially homogeneous layer of a scintillator material having different sensitivities for different dose rates. In this way the dynamic range of the radiation dose meter is substantially increased.

It will be further appreciated that a mixture or blend of the scintillator materials may be arranged on the outer surface of the radiation dose meter as a layer of microscopic spheres having about 1µ diameter. Still alternatively, the layer may be substantially flat and homogeneous.

It is found to be advantageous to provide means for enabling relative dosimetry next to absolute dosimetry carried out by the radiation dose meter according to the invention. For example, measurement of the dose distribution may be enabled using the set scintillators. Preferably, the scintillators may be arranged to cooperate with an optical unit for read-out, like a mirror and a remotely arranged camera, for example in a location outside the main magnetic field of the MR apparatus, so that electronics of the camera unit is not interfered. It is also possible to place the camera outside the B-field using a suitable shielding. Shielding of the camera against H-field is found to be possible when the camera is positioned outside the B-field. E-filed may be shielded from using camera housing, for example.

By allowing the scintillators to emit scintillation light of different individual wavelength, for example, red, green, blue and by coupling them to a three-chip camera, a substantial increase of the dynamic range may be reached. It will be appreciated that any other suitable plurality of scintillators may be used, including into the invisible ultraviolet and/or infrared range.

For example, a first scintillator may be arranged to be saturated for a low dose rate, such as 0.1 Gy/min, a second scintillator may be arranged to be saturated for an intermediate dose rate, such as 1 Gy/min, and a third scintillator may be arranged to be saturated for a higher dose rate, such as 10 Gy/min. In such a way the dynamic range for different dose tempi is substantially increased compared with a system using a single scintillator. It will be appreciated that such scintillation system comprising a set of scintillators operable in different dose rate regions may be used as such, with or without combination with the radiation dose meter according to the invention.

In a still further embodiment of the invention, a system is provided comprising a plurality of radiation dose radiation dose meters as is set forth in the foregoing. Preferably, individual radiation dose meters are mechanically coupled. In this way suitable one-, two- or three-dimensional arrays may be made for enabling dose measurements along a line, in a plane or in a volume.

A magnetic resonance imaging unit according to the invention comprises a radiation dose meter as is set forth in the foregoing or a radiation dose meter system as is set forth in the foregoing. Preferably, in the magnetic resonance imaging unit the radiation dose meter or system is mounted in a bore. More preferably, bore is fitted with a plurality of radiation dose meters along a concentric line.

A nuclear fusion reactor which produces very strong magnetic fields to contain the extremely hot plasma, poses similar problems to dosimetry as an MRI. Therefore a nuclear fusion reactor according to the invention comprises a radiation dose meter as is set forth in the foregoing or a radiation dose meter system as is set forth in the foregoing.

These and other aspects of the invention will be discussed in further detail with reference to drawings, wherein like reference signs relate to like elements. It will be appreciated that the drawings are presented for illustrative purposes and may not be used to limit the scope of protection of appended claims.

### BRIEF DESCRIPTION OF THE DRAWINGS

Figure 1 presents schematically an embodiment of a radiation dose meter according to the invention.
Figure 2 presents schematically an embodiment of the ionization chamber manufactured using additive manufacturing technique.
Figure 3 presents schematically an embodiment of a magnetic resonance imaging apparatus according to the invention.
Figure 4a presents schematically an arrangement comprising a radiation dose meter according to the invention cooperating with an external camera.
Figure 4b presents a schematic view of an embodiment of the radiation dose meter according to an aspect of the invention.

### DETAILED DESCRIPTION OF THE DRAWINGS

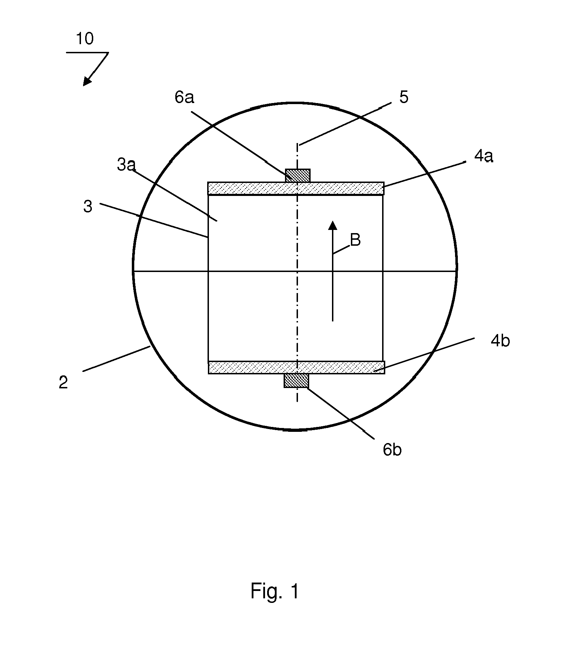

Figure 1 presents schematically an embodiment of a radiation dose meter according to the invention. The arrangement 10 comprises a radiation dose meter 3 arranged for measuring radiation dose, like dose from high energy photon radiation, in an external magnetic field, creates charged particles generated in the radiation dose meter by said radiation. The radiation dose meter 3 is provided with an alignment unit 6a, 6b, 2 for enabling alignment of the path of the charged particles inside the radiation dose meter precisely along the field lines of the external magnetic field B.

For this purpose the radiation dose meter 3 is provided with a material 6a, 6b capable of at least partially magnetizing in the external magnetic field, wherein the material is provided along the axis 5 of the radiation dose meter 3. In the present embodiment for the radiation dose meter 3 an ionization chamber is selected having two mutually flat electrodes 4a, 4b. When the ionization chamber is subject to ionizing radiation, like high energy photon radiation, charged particles, generated inside the ionization volume 3a, propagate towards respective electrodes upon application of a voltage thereto. In such a configuration, the charged particles are expected to propagate parallel to the central axis 5 of the ionization chamber 3.

It will be appreciated that such axial alignment of the material 6a, 6b is proper when the charged particles generated inside the radiation dose meter are expected to propagate along the axis. Those skilled in the art will readily appreciate which positioning of the material 6a, 6b is necessary for specific radiation dose meters.

In order to enable instant and automatic alignment of the radiation dose meter in the external magnetic field, the radiation dose meter 3 is, in accordance with an aspect of the invention, suitably arranged in alignment means 2 enabling three-dimensional rotation of the radiation dose meter.

Preferably, the radiation dose meter 3 is suspended inside a gimbal suspension. However, the alignment system may alternatively comprise ball bearings or may comprise suitable springs.

Still preferably, in accordance with widely accepted standards the volume of the ionization chamber is about 5x5x5 mm³, more preferably about 7x7x7 mm³, which is found to be sufficient to determine dose of megavolt photon beams.

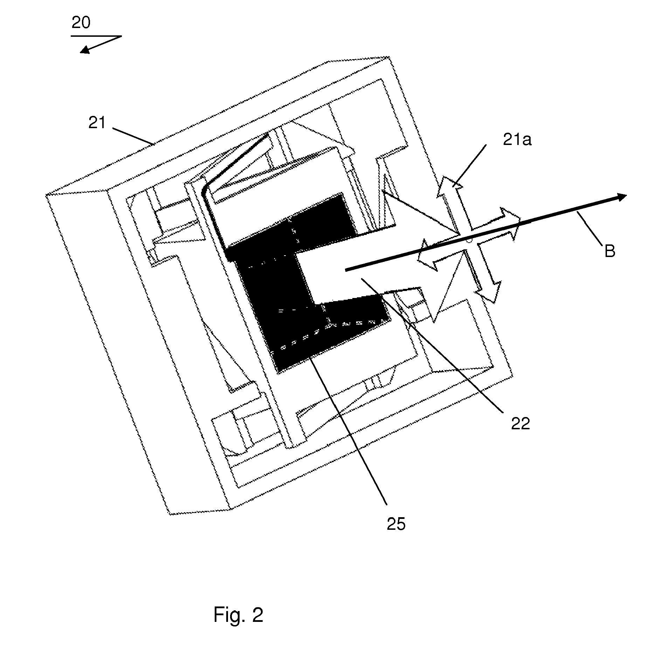

Figure 2 presents schematically an embodiment of the ionization chamber manufactured using additive manufacturing technique. In this embodiment the ionization chamber comprising plates 25 is manufactured inside a suitable frame using additive manufacturing techniques.
In this embodiment, the axis of the ionization chamber 22 is provided with a ferromagnetic or paramagnetic material as is described with reference to Figure 1. Arrow 21a schematically indicates that the arrangement 20 may be translated in two dimensions. Preferably, the arrangement 20 may be rotated as well for enabling substantially full alignment of the axis 22 with the external magnetic field B.

The suitable ferromagnetic or paramagnetic material may be provided along the central axis 22 of the ionization chamber on or in vicinity of the electrodes 25 (only one is shown for clarity).

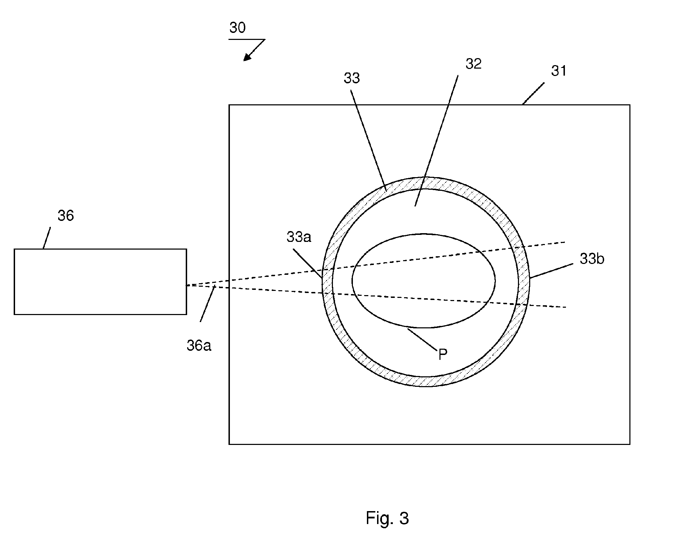

Figure 3 presents schematically an embodiment of a magnetic resonance imaging apparatus according to the invention. In this particular embodiment a combined treatment and imaging system 30 is shown, wherein the patient P to be irradiated to a high energy photon beam 36a generated by a linear accelerator 36 is positioned inside a bore 32 of a magnetic resonance imaging unit 31.

In accordance with an aspect of the invention, the magnetic resonance imaging apparatus 31 is provided with at least one radiation dose meter 33 for carrying out relative or absolute dosimetry in real time, i.e. during the time the high energy photon beam 36a is on.

Preferably, in accordance with an aspect of the invention, the bore 32 is provided with an array of radiation dose meters capable of self-orienting in the external magnetic field of the MR apparatus along a concentric line. For example, the bore 32 may be provided with a three-dimensional array 33 of the radiation dose meters which, by self-aligning in the magnetic field of the MRI apparatus, as is described with reference to the foregoing, deliver accurate dose readings during treatment. Preferably, the array 33 is used for measuring an entrance dose 33a and an exit dose 33b. These readings may be used for controlling dose level as well as dimension and alignment of the photon field 36a with respect to the target volume inside the patient P. As a result treatment efficiency and accuracy is substantially improved.

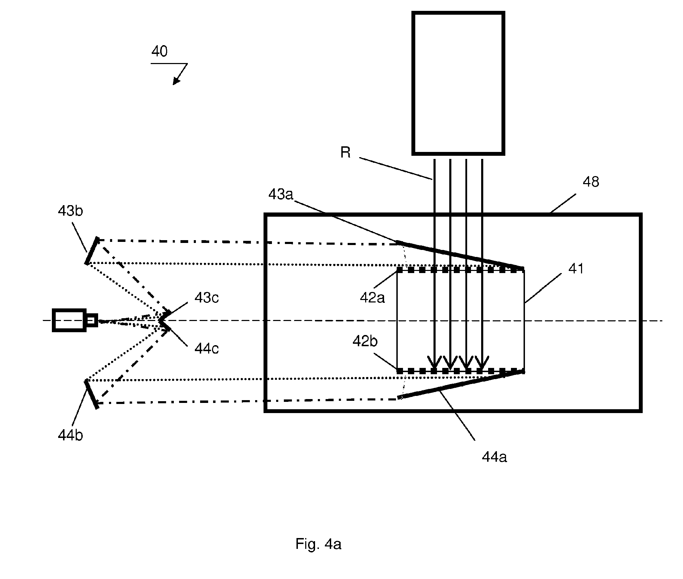

Figure 4a presents schematically an arrangement comprising a radiation dose meter according to the invention cooperating with an external camera. The arrangement 40 comprises a radiation dose meter 41 and a camera 42. The radiation dose meter 41 is arranged inside the MR apparatus 48 in the area of the constant magnetic field. The radiation dose meter may comprise a suitable phantom, which may homogeneous or inhomogeneous. Ionizing radiation R originating from a suitable linear accelerator (or another suitable unit capable of generating ionizing radiation) is intercepted by the radiation dose meter 41. For purposes of dosimetry, the outer surfaces of the radiation dose meter 41 are provided with layers of scintillator material 42a, 42b.

As is explained earlier, the scintillator material may comprise a matrix of distinct scintillator materials having different sensitivity for different dose rates. Alternatively, the scintillator material may comprise a layer comprising a blend or a mixture of different scintillator materials.

Light generated by the different scintillator materials may be conducted towards the camera 42 using a suitable set of mirrors 43a, 43b, 43c, 44a, 44b, 44c.

It will be further appreciated that various embodiments of the phantom 41 are possible. First, the phantom may be water filled or may be manufactured from a tissue compatible solid material. The phantom may further comprise attachment positions for the auto-aligning ionization chamber, as is discussed earlier.

Alternatively, the phantom 41 may be inhomogeneous, simulating different organs or tissues of a human. For example, the phantom 41 may be provided for simulating longs. For this purpose, different materials simulating lungs and surrounding tissue may be provided. More in particular, the phantom 41, may be arranged for simulating physiologic movement of the organs. For this purpose compartments housing specific tissue-equivalent materials (lungs, muscle) may be made flexible and displaceable. Preferably, such compartments may be arranged to be controlled by a suitable external device, such as a pump. Those skilled in the art will readily appreciate that a great plurality of tissues and organs may be simulated by such phantom. Preferable embodiments include, but are not limited to lungs, prostate and/or rectum, bladder and esophagus.
Preferably, at least one compartment simulating an organ is provided using additive manufacturing.

It will be further appreciated that the at least one compartment may be adapted to simulate an internal deformable organ or a plurality of mutually interacting deformable internal organs as known from human anatomy. In addition, the compartments may be adapted to simulate complex movements of the organs, for example pursuant to breathing and cardiac pacing. More in particular, the compartments may be adapted to simulate relative displacement of a plurality of organs or tissues pursuant to a movement pattern of a particular organ, such as lungs or heart.

Using additive manufacturing methods (preferably shaping multiple material types in the same build-up process) has an advantage that with additive manufacturing techniques very precise reproductions of real patient scans (using MRI, CT, PET, gamma-camera, ultrasound, etc.) can be made in a very precise and reproducible manner. This means that reproducible complex dynamic phantoms with e.g. truly expanding lungs containing complex tumors can be made.

One of the main advantages of combined MRI and LINAC modalities is that this allows to carefully adapt the dose focus to the time-varying geometric position of the tumor. This is a dynamic cybernetic process, which needs accurate validation and thus a realistic dynamic test object. It will be appreciated that the MRI apparatus may be suitably adapted to allow passage of the ionizing radiation towards the patient. For example, MRI units comprising free lateral space may be preferred. Alternatively, bore-based MRI units may be adapted for allowing the ionizing radiation to reach the patient without a substantial interference with the electronics of the MRI apparatus.

By using the phantom dynamically simulating an organ, accurate dosimetry may be carried out using the auto-aligning ionization chamber and/or the scintillation detectors in accordance with the invention. In this way radiation protocols in the presence of a strong external magnetic field may be validated. Preferably, the auto-aligning ionization chamber is provided with a magnet, which is saturated for minimizing distortion of the magnetic field in the MR apparatus.

More preferably, the phantom 41 is provided with a plurality of auto-aligning ionization chambers for enabling an absolute measurement of the dose, dose rate or any other suitable parameter. The reading from the scintillators may be suitably related to the readings of the ionization chambers for providing accurate surface dose data. Preferably, at least one ionization chamber is provided at a prescribed depth in a target volume. Other ionization chambers may be provided for measuring surface/exit dose, field flatness, or any other relevant dosimetric value.

Figure 4b presents a schematic view of an embodiment of the radiation dose meter according to an aspect of the invention. In this embodiment, the external surface of the phantom 41 is covered by a matrix comprising four different scintillator materials. The unit 45a, 45b, 45c, 45d of the four different scintillator materials is suitably translated over the surface of the phantom 41. It will be appreciated that the invention is not limited to the present embodiment, either with respect to the number of scintillators, or with respect to the configuration and/or translation of the repetition unit. A surface area of a unit of the kind 45a, 54b, 45c, 45d may be about 1 mm².

It will be further appreciated that, alternatively, the outer surface of the phantom 41 may be covered by a substantially homogeneous layer (not shown) comprising a suitable mixture of blend of different scintillator materials for enabling a substantially continuous dose delivery control.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A radiation dose meter for measuring radiation dose in an external magnetic field by means of charged particles generated in the radiation dose meter, the radiation dose meter provided with an alignment unit capable of auto aligning the radiation dose meter in the external magnetic field so that a path of the said charged particles inside the radiation dose meter is substantially parallel to a direction of the external magnetic field.

2. The radiation dose meter according to claim 1, wherein the alignment unit comprises a material susceptible for being at least partially magnetized by the external magnetic field.

3. The radiation dose meter according to claim 2, wherein the material is selected from a group consisting of a ferromagnetic material or a paramagnetic material.

4. The radiation dose meter according to any one of the preceding claims, wherein the alignment unit comprises a mounting frame capable of enabling a three-dimensional displacement of the dose meter pursuant to forces acting on the said material.

5. The radiation dose meter according to claim 4, wherein the alignment unit comprises gimbal suspension.

6. The radiation dose meter according to claim 4 or 5, wherein the alignment unit comprises a plurality of springs for enabling such displacement.

7. The radiation dose meter according to any one of the preceding claims, comprising an ionization chamber or a semiconductor material.

8. The radiation dose meter according to claim 7, wherein the ionization chamber comprises a pair of mutually parallel electrodes.

9. The radiation dose meter according to any one of the preceding claims, wherein the dose meter is manufactured using additive manufacturing technique.

10. The radiation dose meter according to any one of the preceding claims 2 - 9, wherein the said material is implemented as a coreless electromagnet.

11. The radiation dose meter according to any one of the preceding claims, further comprising a set of scintillators, each scintillator being sensitive to a particular pre-determined radiation dose rate range and a camera cooperating with the said set of scintillators.

12. The radiation dose meter according to claim 11, wherein each scintillator is adapted to emit scintillation light of different wavelength with respect to other scintillator or scintillators from the set.

13. The radiation dose meter according to any one of the preceding claims, further comprising a phantom provided with at least one compartment simulating an organ or an area of a human body.

14. The radiation dose meter according to claim 13, wherein the at least one compartment is adapted to simulate an organ selectable from the group consisting of: lungs, prostate, rectum, esophagus, bladder.

15. The radiation dose meter according to claim 13 or 14, wherein the at least one compartment is automatically displaceable for simulating an organ movement.

16. The radiation dose meter according to any one of the preceding claims 13 - 15, wherein the at least one compartment simulating an organ is provided using additive manufacturing.

17. A radiation dose meter system comprising a plurality of individual radiation dose meters according to any one of the preceding claims.

18. The radiation dose meter system according to claim 17, wherein individual radiation dose meters are mechanically coupled.

19. A magnetic resonance imaging unit comprising a radiation dose meter according to claims 1 - 16 or a radiation dose meter system according to claims 17 or 18.

20. A magnetic resonance imaging unit according to claim19, wherein the radiation dose meter or system is mounted in a bore of the magnetic resonance imaging unit.

21. A magnetic resonance imaging unit according to claim 20, wherein the bore is fitted with a plurality of the radiation dose meters along a concentric line.

22. A nuclear fusion reactor comprising a radiation dose meter according to claims 1 - 16 or a radiation dose meter system according to claims 17 or 18.
